# EUROPEAN PATENT SPECIFICATION

(11) **EP 4 081 891 B1**
(45) Date of publication and mention of the grant of the patent: **08.04.2026**
(21) Application number: 20909679.1
(22) Date of filing: 23.12.2020
(51) Int. Cl.: G06F 3/12

(54) **VIRTUAL PRINTING NETWORK WITH PRINTER SELECTION MEANS**
VIRTUELLES DRUCKNETZ MIT DRUCKERAUSWAHLMITTELN
RÉSEAU D'IMPRESSION VIRTUELLE COMPRENANT DES MOYENS DE SÉLECTION D'IMPRIMANTE

(30) Priority: 29.12.2019 US 201962954526 P
(43) Date of publication of application: 02.11.2022
(73) Proprietor: Kornit Digital Ltd., 4809245 Rosh HaAyin (IL)
(72) Inventor: AVIDAN, Guy, 3090930 Zichron Yaakov (IL); SHIMONI, Allon, 7177133 Modiin-Maccabim-Reut (IL); MANN, Jacob, 4282300 Zoran (IL); KULKA, Omer, 6437222 Tel Aviv (IL); ABBO, Haggai, 5552567 Kiryat Ono (IL)
(74) Representative: Eisenführ Speiser
(86) International application number: PCT/IL2020/051326
(87) International publication number: WO 2021/137211

(56) References cited:
- CA-A1- 3 037 404
- CN-C- 100 440 916
- JP-A- 2008 269 071
- KR-B1- 101 417 813
- US-A1- 2003 133 146
- US-A1- 2008 246 988
- US-B1- 10 120 628
- US-B2- 7 102 778
- US-B2- 8 747 097

## Description

### RELATED APPLICATION/S

This application claims the benefit of priority of U.S. Provisional Patent Application No. 62/954,526 filed on 29 December 2019.

### FIELD AND BACKGROUND OF THE INVENTION

The present invention, in some embodiments thereof, relates to a virtual printing network and, more particularly, but not exclusively, to a network providing online access to printers, more particularly textile printers or 3D printers, so as to allow printing of the textiles.

Online access for customized production of any kind raises general challenges. The process of making a globally distributed supply of heterogeneous manufacturing machines to globally distributed demand made up of manufacturer, retailers and consumers raises the issues of lack of consistency in the finished product since they are made on different machines in a way which is undefined. Likewise, repeatability at deferent times and places is challenged.

Problems may be exacerbated by the absence of any global quality standard or expectation. Thus orders from different parts of the globe may have different implied quality standards.

Manufacturing efficiency is difficult to manage when orders are being sent to the next available machine on a large network, and likewise, price and lead time optimization can be a difficult issue.

In the case of placing orders with unknown parties, there is a fundamental problem in such a market with the need to establish trust among strangers. Inefficient communication between the demand and supply sides may cause an imbalance in supply, and thus lead to under or over utilization. Furthermore, pricing methods need to be aligned to new technologies and business models.

Currently, there is available means to automate the task of proofing for printing, and can handle printed publications but also industrial products such as labels, shrink sleeves, flexible packaging, folding cartons and boxes, cans and closures as well as printed publications. Systems based on AVT technology may even initiate corrective action, but are limited to a single system and machine or set of machines and to cases where a single system-wide standard is available. It is not extended to systems where the printing device is arbitrarily selected over a network and outside the control of the customer.

US 2003/133146 A1 Parry Travis 17th July 2003 discloses selecting a printer from multiple printers to fulfil a print job. The print request is received at one of the printers and distributed to another printer that is determined to have the capabilities required.

CA 3 037 404 A1 Schiestl Angelo 5th April 2018 discloses a system for operating textile printing machines, comprising a first textile printing machine and at least one other printing machine that are independent of each other.

### SUMMARY OF THE INVENTION

The invention is set out in the appended set of claims. The hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Fig. 1 is a schematic block diagram illustrating printing machines networked to a cloud-hosted system to make them available to a user according to embodiments of the present invention;
Fig. 2 is a simplified flow chart illustrating a procedure for updating a profile for a printing machine according to embodiments of the present invention;
Fig. 3 is a simplified flow chart showing how the user goes through the process of placing an order, according to embodiments of the present invention;
Fig. 4 is a simplified flow chart showing how the hosted system manages machines and orders according to embodiments of the present invention.

### DESCRIPTION OF SPECIFIC EMBODIMENTS OF THE INVENTION

The present invention, in some embodiments thereof, relates to a virtual printing network and, more particularly, but not exclusively, to a network providing online access to printers, more particularly textile printers or 3D printers, so as to allow printing of the textiles or 3D objects.

A system for networked printing of images onto textiles, or for printing 3D objects from 3D blueprints, where the entity placing an order for printing has no control over the machines carrying out printing, comprises an electronic network and textile or 3D printing machines, belonging to different providers, attached to the network. Each of the printing machines has a corresponding printing quality profile of parameters that indicate abilities of the printer to reproduce an image on a textile or an object from a blueprint. An input enables a user to place an order for textile printing of an image or 3D printing of an object and select or define a required printing quality profile. The parameters of the image or blueprint themselves may demand certain printing quality levels. The textile or 3D object printing order is sent for printing to a printing machine on the network that is selected for a printing quality profile which best matches the profile required. Other parameters such as cost, delivery time and additional required processes may also be considered.

The network of online printers according to the present embodiments may enable users who have no connection with the providers of the printers to place orders for textile or 3D printing in such a way that the users have control over print quality and other parameters.

The system may be hosted on a specified server or may be cloud based and may provide the end user with an input interface through which to specify print orders. A textile or 3D printing machine is selected according to criteria provided as part of the order and printing of the specified image on the specified textile/garment, or of the 3D object according to a blueprint, is carried out. The final product may then be delivered as specified in the order. The printing machines used have a quality profile specifying the standard to which they print. The quality profile is updated at intervals by test printing a reference image and matching the test print with the reference. It is to be noted that test printing to update the quality profile is not the same as testing the printing output for quality assurance. The former grades the machine while the latter grades the printed object, garment or fabric.

Input images or blueprints for printing are provided with the print orders. In embodiments, inputs may be checked for uniqueness, say for copyright purposes or may be scanned for trademarks, and to check whether necessary licenses are in place.

Based on the quality level that any given machine provides and based on the image to be printed, the garment or fabric it is to be printed on, the material and colors needed for the 3D object, size etc. and any special requirements of the customer, the printing machine provider is able to bid for the user's order. Generally, costs for digital printing depend on the image to be printed, and the price per garment or object is the same irrespective of the size of the order. The analogue competition, using screen printers, or injection molding machines, is very expensive for small orders but very cost-effective for large orders. Thus the digital machine provider will tend to offer prices for small batches that are below what the screen printer is able to offer, and the ability to participate in a network of this kind provides a further differentiation over analog printing, since the analog printer is not able to digitally update a printing profile on demand.

Each printer may give several quality levels. A printer may give a fast and low cost (of ink and/or time) and the printed image quality (in terms of color gamut, accuracy etc.) might be lower than low speed, high cost (of ink and/or time) so each printer might have several quality levels. Thus each separate quality level on each physical printer may be regarded as a separate virtual printer, so that bids received may exceed the number of physical printers on the network, and the number of optional printers may be based on optional quality levels and printers.

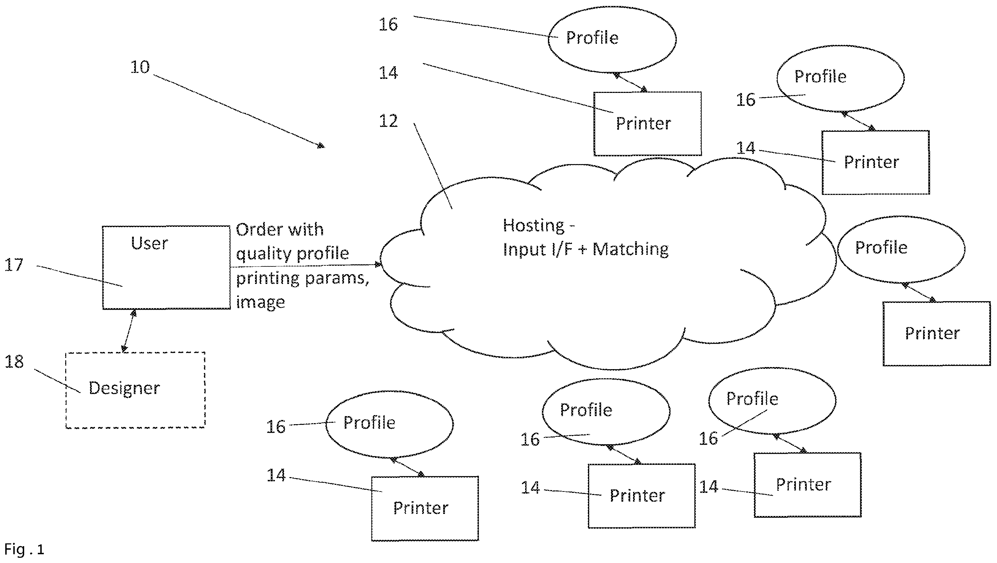

Referring now to the drawings, Figure 1 illustrates a system for networked printing of images onto textiles. The present embodiment relates to textile printing but the skilled person will understand the non claimed parallel embodiment for a 3D printer. The system 10 is made up of an electronic network such as the Internet which allows access to cloud hosting 12. The hosting system connects up any number of textile printers 14 at different locations and belonging to different providers. Each one of the printing machines is associated with one or more printing quality profiles 16. The printing quality profile contains information about the abilities of the particular printer and in particular is indicative of a level of accuracy of the given printer in reproducing an image on a textile, as well as other parameter such as prices for each profile. The same printer may be able to print using any of several different profiles and may offer each profile at a different price.

An input interface is provided for a user 17 to place an order for textile printing of an image. The input is typically cloud hosted and accessed by a web connection but may alternatively be provided as an application that the user can download. The input enables the user 18 to provide the image for printing and allows the user to select a printing quality profile, price and printing parameters. The input may allow the user to select between different available machines that offer the required quality parameters, or to select between different machines that provide parameters, prices close to those that are required. The system may offer the order to all machines that are suitable so that the machines are able to bid. In the case of bidding, the bid winner may automatically be chosen, or there may be differences between bidders, such as price or delivery time or term of returning the goods, and the user may choose an optimum between more than one factor in selecting a machine to carry out the printing. The textile printing order is then sent for printing to the textile printing machine that has been selected with the selected profile. The printing machine selection is thus based on finding machines having a printing quality profile which is the same as or near to the printing quality that the end user has selected.

In an embodiment, the user is not a single entity providing an image and wanting it printed. Rather the user may have interacted with a designer 18. The parties may be a supplier working with a designer, or a consumer working alone or optionally with a designer 18, so that a designer provides an image, possibly specified for a particular garment or fabric, and a supplier working with the designer then makes an order of unique garments or fabric to sell. Alternatively, consumers may work with a designer 18 through the interface provided with the input, and thus use the network both to order designs and then to make orders for unique garments or fabric. The input may be an interface that can enable an interaction between designer 18 and another party 17, whether a supplier or consumer, and then pass on the order to a printing machine so that an interaction is created between up to three independent parties. In some cases a further independent party, a vendor of the garment or fabric that the image is to be printed on may be involved. All of these parties to the transaction are able to interact via interfaces to the system of the present embodiments.

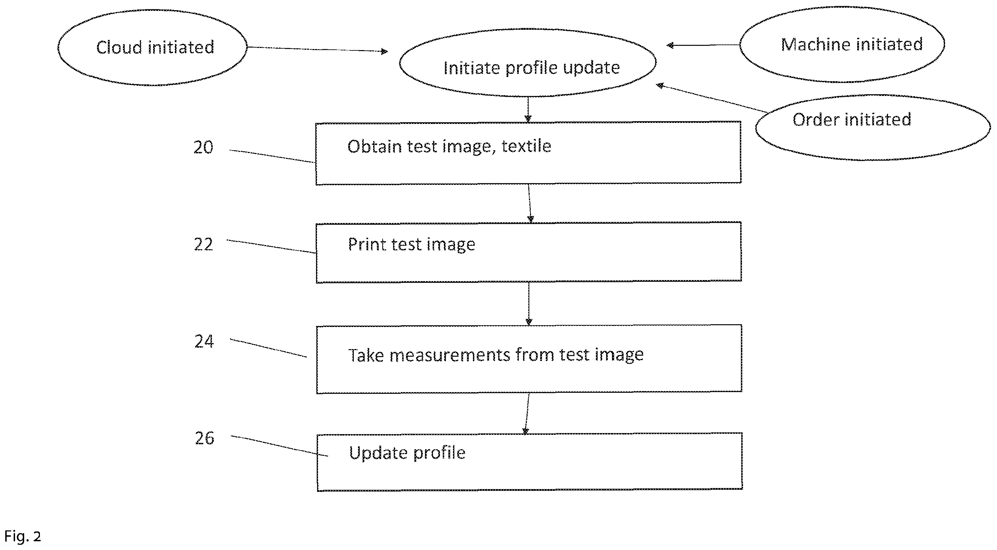

Reference is now made to Fig. 2, which is a simplified flow chart that illustrates a procedure for updating the profiles of the textile printing machines. The textile printing machines update their respective printing quality profiles at intervals, and the machines themselves may be set to initiate the updating or the cloud-based host 12 may initiate updating. In an embodiment, certain print orders, for example relatively large print orders, may themselves initiate profile updating. In an embodiment, certain customers may be able to demand a profile update from machines of interest. The test begins with a test image that is provided to the printer for printing on a textile - 20. The image is printed 22 and measurements are taken to obtain image parameters of the resulting print - 24. The test results are used to update the current profile of the machine. For example, one of the parameters may be color. The system may measure colors in the image and compare them to the colors in the test image to determine a color accuracy. The system may measure the color gamut of the printers, for example the system may note that certain colors at particular parts of the spectrum are not reproduced well, although other parts of the spectrum are well reproduced. The color range may be derived from the color accuracy measurements taken over the spectrum and a color measurement device may be used.

Another parameter of interest is resolution. Resolution relates to sharpness of lines and features in the image and to the smallest writing that is legible, and is a function of the pixel size of the printer, of the type of fabric on which the image is printed, on pre-treatment processes used and on printer parameters such as possible usage of delay between different layers or process.

Another parameter is registration accuracy. In general, different colors are printed in different passes over the textile and a clear result requires exact registration between the passes.

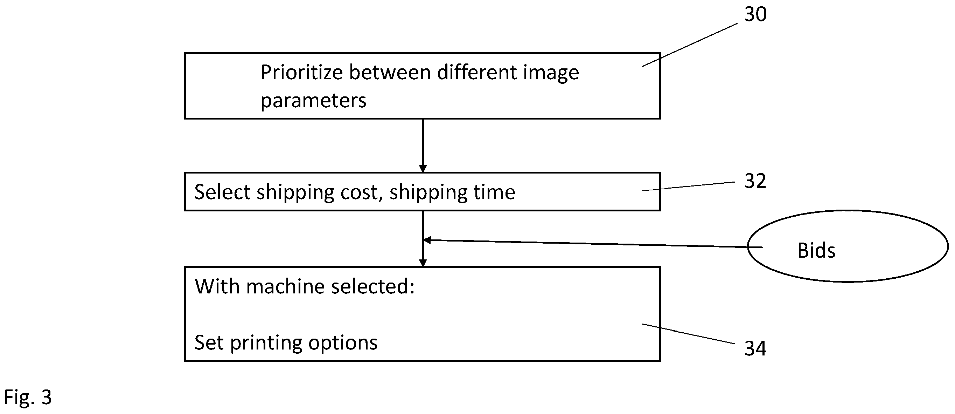

Reference is now made to Fig. 3 which is a simplified diagram showing how the user may make use of the printer profiles and select a suitable printer via the interface available at the input. The user may set the desired image parameters when placing the order so that a suitable printer may be found - 30. The user may use the available interface at the input to prioritize one or more of the parameters, so for example, in reproducing a photograph, exact color matching and resolution may be regarded as essential. In reproducing a cartoon type illustration a much smaller color range is needed and exact color matching is less important. The different parameters may have different costs and the user is able to raise and lower the priorities of different parameters to meet an order cost.

The input at the interface may allow the user to prioritize between different machines using a parameter related to the physical location of the textile printing machine, such as delivery time, the time at which the machine is able to promise that the order received now can be delivered to the specified destination. A further parameter may be shipping cost or delivery cost - 32. Once a machine is selected then printing options may be set, 34, at the given machine. Again the different options may be associated with costs. For example the option may be available to print a white undercoat, and there may be an option to select printing speed, or select between printing speed and resolution accuracy.

The hosted system may further analyze the image provided for various parameters and these may be combined with parameters provided by the user in order to analyze the complexity of the order and select available printing machines for the user to select between. Thus a simple cartoon image requiring only four colors and low resolution may be much simpler and cheaper to print than a detailed color photograph and may be sent to a less sophisticated and calibrated machine.

Once the printing machine is selected from the various machines available on the network, the textile printing order is printed at the selected textile printing machine. Selection of the machine may be made through the interface by the user based on suitable machines that match the parameters, or the hosted system may select the machine to do the printing based on the parameters provided. Selection may be made based on print quality parameters as well as price, delivery time and other parameters in bids provided by the machines deemed relevant. Artificial intelligence may be used in the bidding process, to do any of selecting relevant machines to participate in the bidding process, making bids and selecting the winner.

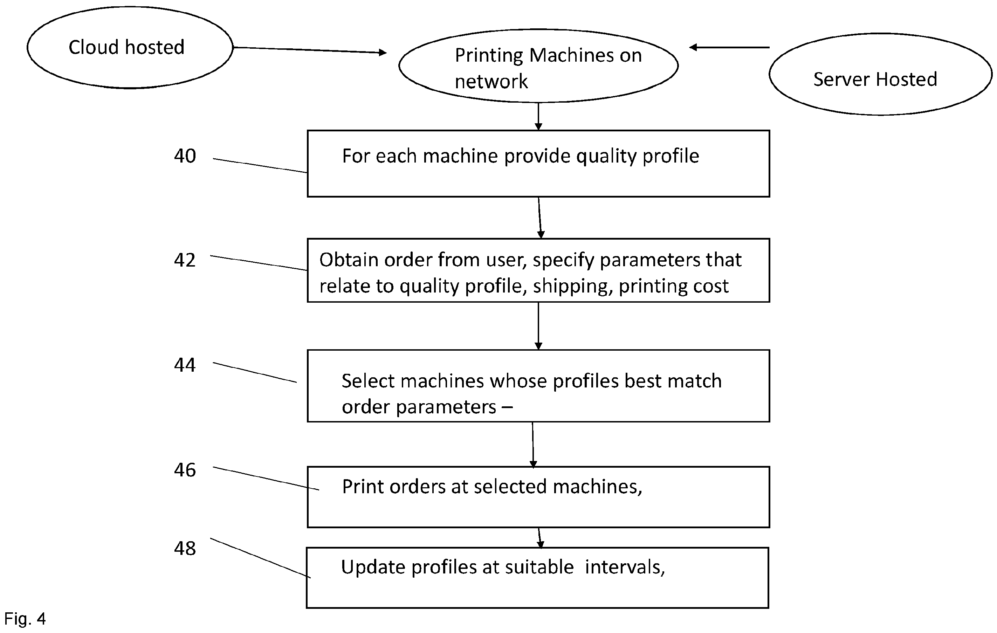

Reference is now made to Fig. 4 which is a flow chart showing an overall method for networked printing of images onto textiles according to embodiments of the present invention. Initially multiple textile printing machines, belonging to different entities and having no common control, are connected over an electronic network to a common system that may for example be hosted on the cloud or on a specified server - 40. Each printing machines obtains its own printing quality profiles, which, as discussed, is indicative of the abilities of the printer in reproducing an image on a textile with specific costs and other parameters - 42.

The user, via an input interface provides an order for textile printing of an image -44. As discussed above, the user need not be a single entity but may be the result of an interaction between several entities, say a designer and a supplier or consumer. The user provides an image and indicates the garment or fabric that the image is to be printed on. In some cases the garment or the fabric may be supplied by the user. In other cases the garment or the fabric may be the subject of a separate order that is also managed by the network and is delivered to the printing machine. The user selects printing parameters that correspond to parameters on the machines' printing quality profiles. As well as printing parameters relating to the machine's ability, there are parameters relating to the image that the user wants to have printed by the machine and the textile or fabric that the image is to be printed on. Furthermore, there are parameters relating to printing cost, additional costs for optional features, delivery time and delivery cost. In other cases, the garment or the fabric may need to go over further steps such as embroidery, other decoration processes, sewing or other steps the customer might desire. The customer might choose a producer that has those capabilities or to do it elsewhere depending on different parameters and costs. The user may raise or lower the priorities of different parameters to meet a desired order cost.

A machine is then selected. The user may be sent a menu of suitable machines based on the selected parameters from which the user makes a selection. The selection may be in the form of a tender, the machines on the menu may bid for the order and as discussed the user or the system may select one of the machines. The order is then sent to the selected machine and printed.

Considering the embodiments in greater detail, there is provided a process that may include design and purchasing of a printed garment or fabric that is delivered to an end-user's door step. Various stages involve selection of an image or design, selection of a garment or fabric to which the image is to be applied, selection of a printing machine to apply the image to the selected garment or fabric and delivery of the printed garment or fabric. The image may be commercially produced or may be a unique image made specially. The design stages may be carried out by the consumer wishing to produce a unique garment or fabric or a professional designer may be able to interact with garment or fabric suppliers or end users. The process may be divided into two parts, a first part which relates to obtaining a unified unique impression, in which customized or unique designs may be fed into the system, and a differential pricing job router which looks for the most suitable machine to carry out the printing operation.

Using a suitable interface, consumers, designers and manufacturers are enabled to meet over a virtual exchange and agree to manufacture, sell and buy a particular product that may be unique at an agreed print **Quality Level (QL)** at a given **Time** with optional additional steps such as embroidery, attachment of accessories, other decoration processes or sewing, and at a set **Price,** even though there is no direct control between the user and the selected machine.

The user, who may be the end consumer or an independent designer, may provide an image as discussed and specify or provide a garment or fabric onto which the image is to be printed. The image is scanned necessary if not already in electronic form, and uploaded to be hosted on the system, which as discussed may be in the cloud or at a specified server. The image is processed and may for example be verified as a unique image, say for copyright, trade mark and licensing purposes.

Following printing, the vision apparatus in the printing system with suitable software may compare the actual product with the image as provided in order to approve QL.

Assuming constant QL, the consumer may run a tender as discussed above for a Variable price for an e2e product amongst available manufacturers and machines. The bid has options to include one or more other variable parameters, for example see table 1.

**Table 1 Giving weightings to options for a print order**

| Parameter | Scale | Weight | Weighted score |
|---|---|---|---|
| Price $ (Total price) | Rate | 50% | |
| Quality (Base) | High / Medium / Low | 30% | |
| Logistics (Time / days) | 1/2/4 | 20% | |
| Other capabilities | List of options | ~ | |
| Total | | 100% | |

### Differential Pricing Job Router:

Current Job Routing algorithms select a manufacturing tool or method say Analog Vs. Digital, based on constant & known parameters, and predominantly prices. The present embodiments may direct a given job to a particular printing machine based on variable prices for variable parameters and consumables such as inks and pre and post printing treatment preparations, down to a stop-loss point.

Thus a given printing order may require a certain number of liters of ink. A fixed or variable discount may be applied to that order at a given machine, say as a rebate and or as tier pricing. The number of liters of ink needed may apply for higher run length and/or lower number of colors and/or larger image and/or a combination of the three. Thus for example, as run length increases and say the number of colors decrease and say printed image size increase, the actual discount rate may increase correspondingly, up to a given limit, the stop loss. In other cases, an open-ended order may have a fixed or variable margin that may give an edge for digital over analog. As mentioned above, for small quantities, digital printers have the edge but for large quantities, analog printing tends to be cheaper. Relevant parameters that may be involved as fixed and variable parameters for pricing may include those shown in table 2.

**Table 2 - Fixed and Variable Parameters for Pricing a Bid**

| | Subject | Symbol | Analog | Digital | Comments |
|---|---|---|---|---|---|
| (X) | Run length # | R | | | |
| (Y) | Colors # | C | | | |
| (Z) | Image size | S | | | |
| | Setup up time M | T | | | |
| | Labor cost $ | LC | | | |
| | Ink cost $ | IC | | | |
| | Yield % | Y | | | |
| Other costs (screens etc.) | | | | | |
| CPP (variable w/o depreciation) | | CPP | | | |

The printing machine may also be an active participant in the process. The machine has a particular quality profile and may be set in different ways to print. The printer may be connected to the system via an interface and may receive an order to consider. The order may include an image and may include a garment or fabric to which the image is to be applied, or the printing machine proprietor may be requested to obtain the garment or fabric.

The printing machine interface is able to identify various parameters of the image and may be able to issue a bid according to a quality level provided by the machine. The user may be presented with variations that can be added to the print order, such as printing an undercoat, adding additional step or steps to the decoration such as embroidery or sewing or selecting between print speed and resolution or the like.

The interface at the printing machine may be aware of competition pricing levels. In particular, analog style print screening is widely available and tends to be cheaper for long print runs than digital printing is able to achieve but is more expensive for short runs and is prohibitive for single items, it is also more expensive for high number of colors . Thus a differential pricing model may be used at the printing machine to offer a price which is a certain amount lower than an analogue competitor is likely to be able to offer, but with a minimum cutoff to avoid unprofitable transactions. In an embodiment the pricing model may include the price of the garment or fabric as part of the quality factor of the printing.

## Claims

1. A system for networked printing of images onto textiles, comprising:
an electronic network (12);
a plurality of printing machines (14) attached to said network, each one of said printing machines associated with at least one respective printing quality profile (16), the printing quality profile comprising parameters indicative of abilities of said printer in reproducing an image on a textile;
an input interface (17) for a user to place an order for textile printing of an image, the input interface enabling the user to select or prioritize printing parameters for said order, such that the textile printing order is sent for printing to one of said plurality of printing machines (14) on said network selected *inter alia* for having printing parameters most closely matching parameters specified in the order;
where each of said printing machines is associated with a respective printing quality profile, each one of said printing quality profiles being separately selectable;
**characterized in that**
said plurality of textile printing machines are configured to update their respective printing quality profiles at settable intervals; and
said updating comprises printing a test image, measuring a set of parameters of said printed test image and using test results to update the respective printing quality profile.

2. The system of claim 1, wherein one of said set of image parameters is color, the system configured to use a color measuring device to measure colors on said test print and compare said measured colors with source colors to determine at least one member of the group consisting of a color range and a color accuracy.

3. The system of claim 1 or claim 2, wherein one of said set of image parameters is one member of the group consisting of registration accuracy, printing cost, resolution and a parameter relating to an additional process applicable to the textile, said additional process applicable to the textile being one member of the group consisting of a decoration process, embroidery, attaching of accessories, and sewing.

4. The system of any one of the preceding claims, wherein said textile printing order is printed at said selected textile printing machine.

5. The system of any one of claims 2 to 4, wherein said input is configured to enable said user to prioritize at least one of said parameters.

6. The system of any one of the preceding claims, wherein said input is configured to enable a user to prioritize based on at least one parameter related to a physical location of a respective textile printing machine.

7. The system of claim 6, wherein said parameter related to a physical location of a respective textile printing machine is a parameter related to a location of the respective textile printing machine relative to a desired delivery location for printed textiles.

8. The system of claim 6 or claim 7, wherein said parameter related to a physical location is one member of the group consisting of a delivery time and a delivery cost.

9. The system of any one of the preceding claims, wherein said input is configured to enable a user to adjust printing parameters at a selected textile printing machine.

10. The system of claim 9, wherein said parameters are one member of the group consisting of printing speed and printing an undercoat.

11. The system of claim 10, configured to analyze parameters of a provided image for printing combined with parameters provided by said user and to provide said user with a price offer for printing said provided image using a respective textile printing machine.

12. The system of claim 1, wherein ones of said printing machines are associated with a plurality of respective printing quality profiles, each one of said printing quality profiles being separately selectable.

13. A method for networked printing of images onto textiles, comprising:
providing a plurality of textile printing machines (14) attached to an electronic network (12),
for each one of said printing machines (14) obtaining at least one respective printing quality profile, the printing quality profile comprising parameters indicative of abilities of said printer in reproducing an image on a textile (42);
obtaining from a user an order (44) for textile printing of an image, the user selecting one or more printing quality parameters;
sending the textile printing order to one of said textile printing machines on said network whose printing quality profile is the selected printing quality parameters;
**characterized in that**
said method further comprises for each one of said printing machines obtaining at settable intervals an update of their respective printing quality profiles; and
said updating comprises printing a test image, measuring a set of parameters of said printed test image and using test results to update the respective printing quality profile.

14. The method of claim 13, wherein one of said set of image parameters is one member of the group consisting of color, printing cost, registration accuracy and resolution, the method configured to use a color measuring device to measure colors on said test print and compare said measured colors with source colors to determine at least one member of the group consisting of a color range and a color accuracy.

## Patentansprüche

1. System für das netzwerkbasierte Drucken von Bildern auf Textilien, umfassend:
o ein elektronisches Netzwerk (12);
o eine Vielzahl von Druckmaschinen (14), die mit dem Netzwerk verbunden sind, wobei jede dieser Druckmaschinen mit mindestens einem jeweiligen Druckqualitätsprofil (16) assoziiert ist, das Parameter umfasst, die die Fähigkeiten des Druckers bei der Wiedergabe eines Bildes auf Textilien anzeigen;
o eine Eingabeschnittstelle (17) für einen Benutzer, um einen Auftrag zum Drucken eines Bildes auf Textilien zu erteilen, wobei die Eingabeschnittstelle es dem Benutzer ermöglicht, Druckparameter für den Auftrag auszuwählen oder zu priorisieren, sodass der Druckauftrag an eine der Vielzahl von Druckmaschinen (14) im Netzwerk gesendet wird, die unter anderem aufgrund der am besten passenden Druckparameter ausgewählt wird;
o wobei jede der Druckmaschinen mit einem jeweiligen Druckqualitätsprofil assoziiert ist, und jedes dieser Druckqualitätsprofile separat auswählbar ist;
o **dadurch gekennzeichnet, dass** die Vielzahl von Textildruckmaschinen so konfiguriert ist, dass sie ihre jeweiligen Druckqualitätsprofile in festlegbaren Intervallen aktualisieren; und
o die Aktualisierung umfasst das Drucken eines Testbildes und das Messen einer Reihe von Parametern des gedruckten Testbildes, wobei die Testergebnisse verwendet werden, um das jeweilige Druckqualitätsprofil zu aktualisieren.

2. Das System nach Anspruch 1, wobei einer der Bildparameter Farbe ist, und das System so konfiguriert ist, dass es ein Farbmessgerät verwendet, um Farben auf dem Testdruck zu messen und die gemessenen Farben mit den Quellfarben zu vergleichen, um mindestens ein Element aus der Gruppe bestehend aus Farbumfang und Farbgenauigkeit zu bestimmen.

3. Das System nach Anspruch 1 oder Anspruch 2, wobei einer der Bildparameter ein Element aus der Gruppe bestehend aus Registrierungsgenauigkeit, Druckkosten, Auflösung und einem Parameter in Bezug auf einen zusätzlichen Prozess, der auf die Textilien anwendbar ist, ist, wobei der zusätzliche Prozess ein Element aus der Gruppe bestehend aus einem Dekorationsprozess, Stickerei, Anbringen von Zubehör und Nähen ist.

4. Das System nach einem der vorhergehenden Ansprüche, wobei der Textildruckauftrag an der ausgewählten Textildruckmaschine gedruckt wird.

5. Das System nach einem der Ansprüche 2 bis 4, wobei die Eingabeschnittstelle so konfiguriert ist, dass der Benutzer mindestens einen der Parameter priorisieren kann.

6. Das System nach einem der vorhergehenden Ansprüche, wobei die Eingabeschnittstelle so konfiguriert ist, dass ein Benutzer basierend auf mindestens einem Parameter, der sich auf den physischen Standort einer jeweiligen Textildruckmaschine bezieht, priorisieren kann.

7. Das System nach Anspruch 6, wobei der Parameter, der sich auf den physischen Standort einer jeweiligen Textildruckmaschine bezieht, ein Parameter ist, der sich auf den Standort der jeweiligen Textildruckmaschine im Verhältnis zu einem gewünschten Lieferort für bedruckte Textilien bezieht.

8. Das System nach Anspruch 6 oder Anspruch 7, wobei der Parameter, der sich auf den physischen Standort bezieht, ein Element aus der Gruppe bestehend aus Lieferzeit und Lieferkosten ist.

9. Das System nach einem der vorhergehenden Ansprüche, wobei die Eingabeschnittstelle so konfiguriert ist, dass ein Benutzer Druckparameter an einer ausgewählten Textildruckmaschine anpassen kann.

10. Das System nach Anspruch 9, wobei die Parameter ein Element aus der Gruppe bestehend aus Druckgeschwindigkeit und dem Drucken einer Unterlage sind.

11. Das System nach Anspruch 10, konfiguriert, um Parameter eines bereitgestellten Bildes für den Druck in Kombination mit Parametern, die vom Benutzer bereitgestellt werden, zu analysieren und dem Benutzer ein Preisangebot für das Drucken des bereitgestellten Bildes mit einer jeweiligen Textildruckmaschine zu unterbreiten.

12. Das System nach Anspruch 1, wobei einige der Druckmaschinen mit einer Vielzahl von jeweiligen Druckqualitätsprofilen assoziiert sind, wobei jedes dieser Druckqualitätsprofile separat auswählbar ist.

13. Verfahren für das netzwerkbasierte Drucken von Bildern auf Textilien, umfassend:
o Bereitstellen einer Vielzahl von Textildruckmaschinen (14), die mit einem elektronischen Netzwerk (12) verbunden sind;
o für jede der Druckmaschinen (14) mindestens ein jeweiliges Druckqualitätsprofil erhalten, wobei das Druckqualitätsprofil Parameter umfasst, die die Fähigkeiten des Druckers bei der Wiedergabe eines Bildes auf Textilien anzeigen (42);
o von einem Benutzer einen Auftrag (44) für das Drucken eines Bildes auf Textilien erhalten, wobei der Benutzer ein oder mehrere Druckqualitätsparameter auswählt;
o Senden des Textildruckauftrags an eine der Textildruckmaschinen im Netzwerk, deren Druckqualitätsprofil die ausgewählten Druckqualitätsparameter erfüllt;
o **dadurch gekennzeichnet, dass** das Verfahren weiterhin umfasst, für jede der Druckmaschinen in festlegbaren Intervallen eine Aktualisierung ihrer jeweiligen Druckqualitätsprofile zu erhalten; und
o die Aktualisierung umfasst das Drucken eines Testbildes und das Messen einer Reihe von Parametern des gedruckten Testbildes, wobei die Testergebnisse verwendet werden, um das jeweilige Druckqualitätsprofil zu aktualisieren.

14. Das Verfahren nach Anspruch 13, wobei einer der Bildparameter ein Element aus der Gruppe bestehend aus Farbe, Druckkosten, Registrierungsgenauigkeit und Auflösung ist, und das Verfahren so konfiguriert ist, dass es ein Farbmessgerät verwendet, um Farben auf dem Testdruck zu messen und die gemessenen Farben mit den Quellfarben zu vergleichen, um mindestens ein Element aus der Gruppe bestehend aus Farbumfang und Farbgenauigkeit zu bestimmen.

## Revendications

1. Système pour l'impression en réseau d'images sur des textiles, comprenant :
o un réseau électronique (12) ;
o une pluralité de machines d'impression (14) connectées audit réseau, chacune de ces machines d'impression étant associée à au moins un profil de qualité d'impression respectif (16), le profil de qualité d'impression comprenant des paramètres indicatifs des capacités de ladite imprimante à reproduire une image sur des textiles ;
o une interface d'entrée (17) permettant à un utilisateur de passer une commande d'impression textile d'une image, l'interface d'entrée permettant à l'utilisateur de sélectionner ou de prioriser les paramètres d'impression pour ladite commande, de sorte que la commande d'impression textile soit envoyée pour impression à l'une desdites machines d'impression (14) sur le réseau sélectionnée, entre autres, pour avoir des paramètres d'impression correspondant le mieux aux paramètres spécifiés dans la commande ;
o chaque machine d'impression étant associée à un profil de qualité d'impression respectif, chacun de ces profils de qualité d'impression étant sélectionnable séparément ;
o **caractérisé en ce que**
ladite pluralité de machines d'impression textile est configurée pour mettre à jour leurs profils de qualité d'impression respectifs à des intervalles définissables ; et
ladite mise à jour comprend l'impression d'une image de test et la mesure d'un ensemble de paramètres de ladite image de test imprimée, les résultats des tests étant utilisés pour mettre à jour le profil de qualité d'impression respectif.

2. Le système selon la revendication 1, dans lequel l'un des paramètres d'image est la couleur, le système étant configuré pour utiliser un dispositif de mesure des couleurs afin de mesurer les couleurs sur ladite impression de test et de comparer lesdites couleurs mesurées avec les couleurs sources pour déterminer au moins un élément du groupe constitué par la gamme de couleurs et la précision des couleurs.

3. Le système selon la revendication 1 ou la revendication 2, dans lequel l'un des paramètres d'image est un élément du groupe constitué par la précision d'enregistrement, le coût d'impression, la résolution et un paramètre relatif à un processus supplémentaire applicable aux textiles, ledit processus supplémentaire étant un élément du groupe constitué par un processus de décoration, une broderie, la fixation d'accessoires et la couture.

4. Le système selon l'une quelconque des revendications précédentes, dans lequel ladite commande d'impression textile est imprimée sur ladite machine d'impression textile sélectionnée.

5. Le système selon l'une quelconque des revendications 2 à 4, dans lequel ladite interface d'entrée est configurée pour permettre à l'utilisateur de prioriser au moins un desdits paramètres.

6. Le système selon l'une quelconque des revendications précédentes, dans lequel ladite interface d'entrée est configurée pour permettre à un utilisateur de prioriser en fonction d'au moins un paramètre lié à l'emplacement physique d'une machine d'impression textile respective.

7. Le système selon la revendication 6, dans lequel le paramètre lié à l'emplacement physique d'une machine d'impression textile respective est un paramètre lié à l'emplacement de ladite machine d'impression textile respective par rapport à un lieu de livraison souhaité pour les textiles imprimés.

8. Le système selon la revendication 6 ou la revendication 7, dans lequel le paramètre lié à l'emplacement physique est un élément du groupe constitué par le délai de livraison et le coût de livraison.

9. Le système selon l'une quelconque des revendications précédentes, dans lequel ladite interface d'entrée est configurée pour permettre à un utilisateur d'ajuster les paramètres d'impression sur une machine d'impression textile sélectionnée.

10. Le système selon la revendication 9, dans lequel les paramètres sont un élément du groupe constitué par la vitesse d'impression et l'impression d'une sous-couche.

11. Le système selon la revendication 10, configuré pour analyser les paramètres d'une image fournie pour l'impression combinés avec les paramètres fournis par l'utilisateur et pour fournir à l'utilisateur une offre de prix pour l'impression de ladite image fournie à l'aide d'une machine d'impression textile respective.

12. Le système selon la revendication 1, dans lequel certaines des machines d'impression sont associées à une pluralité de profils de qualité d'impression respectifs, chacun de ces profils de qualité d'impression étant sélectionnable séparément.

13. Procédé pour l'impression en réseau d'images sur des textiles, comprenant :
o la mise à disposition d'une pluralité de machines d'impression textile (14) connectées à un réseau électronique (12) ;
o pour chacune desdites machines d'impression (14), l'obtention d'au moins un profil de qualité d'impression respectif, le profil de qualité d'impression comprenant des paramètres indicatifs des capacités de ladite imprimante à reproduire une image sur des textiles (42) ;
o l'obtention d'une commande (44) d'un utilisateur pour l'impression textile d'une image, l'utilisateur sélectionnant un ou plusieurs paramètres de qualité d'impression ;
o l'envoi de la commande d'impression textile à l'une desdites machines d'impression textile sur le réseau dont le profil de qualité d'impression correspond aux paramètres de qualité d'impression sélectionnés ;
o **caractérisé en ce que**
ledit procédé comprend en outre, pour chacune desdites machines d'impression, l'obtention à des intervalles définissables d'une mise à jour de leurs profils de qualité d'impression respectifs ; et
ladite mise à jour comprend l'impression d'une image de test et la mesure d'un ensemble de paramètres de ladite image de test imprimée, les résultats des tests étant utilisés pour mettre à jour le profil de qualité d'impression respectif.

14. Le procédé selon la revendication 13, dans lequel l'un des paramètres d'image est un élément du groupe constitué par la couleur, le coût d'impression, la précision d'enregistrement et la résolution, le procédé étant configuré pour utiliser un dispositif de mesure des couleurs afin de mesurer les couleurs sur ladite impression de test et de comparer lesdites couleurs mesurées avec les couleurs sources pour déterminer au moins un élément du groupe constitué par la gamme de couleurs et la précision des couleurs.
